# EUROPEAN PATENT APPLICATION

(11) **EP 4 030 138 A1**
(43) Date of publication of application: **20.07.2022**
(21) Application number: 22150195.0
(22) Date of filing: 04.01.2022
(51) Int. Cl.: G01C 21/20, G01C 21/36, H04W 4/029, H04W 4/021

(54) **METHOD, RECORDING DEVICE AND COMPUTER PROGRAM PRODUCT FOR RECORDING DATA OF A TRIP**

(30) Priority: 15.01.2021 TW 110101658
(71) Applicant: MiTAC Digital Technology Corporation, Taoyuan City 33383 (TW)
(72) Inventor: YANG, Shan Chih, 33383 Taoyuan City (TW); LU, Chieh Wen, 33383 Taoyuan City (TW)
(74) Representative: Stöckeler, Ferdinand

(57) **Abstract**

A method for recording data of a trip is implemented by a processor of a recording device and includes: in response to receipt of a location record, performing a trajectory analysis on the location record so as to determine, with respect to a plurality of point of interest (POI), whether each of the POIs has been visited; and generating a travel record that includes the location record and any POI that has been visited.

## Description

The disclosure relates to a method, a recording device and a computer program product for recording data of a trip.

Nowadays, thanks to the progress of the networking structures such as the 5G network, large amount of travel-related information is readily available to the public, making self-guided travels or backpacking become more popular and much easier than in the past. Typically, when planning for a self-guided travel, a traveler may decide on a number of destinations of interest (e.g., tourist attractions, restaurants, etc.) to be visited in the duration of the self-guided travel. Due to the nature of self-guided travel, the traveler may or may not actually visit each and every one of the destinations of interest.

Therefore, an object of the disclosure is to provide a method for recording data of a trip.

According to one embodiment of the disclosure, the method is implemented by a processor of a recording device, and includes:
in response to receipt of a location record, performing a trajectory analysis on the location record so as to determine, with respect to a plurality of points of interest (POIs), whether each of the POIs has been visited; and
generating a travel record that includes the location record and any of the POIs that has been visited.

Another object of the disclosure is to provide a recording device that is configured to implement steps of the abovementioned method.

According to one embodiment of the disclosure, the recording device includes a processor that is configured to:
in response to receipt of a location record, perform a trajectory analysis on the location record so as to determine, with respect to a plurality of points of interest (POIs), whether each of the POIs has been visited; and
generate a travel record that includes the location record and any of the POIs that has been visited.

Another object of the disclosure is to provide a computer program product that includes instructions that, when executed by a processor of an electronic device, cause the processor to implement steps of the abovementioned method.

Other features and advantages of the disclosure will become apparent in the following detailed description of the embodiments with reference to the accompanying drawings, of which:
Figure 1 is a block diagram of a recording device according to one embodiment of the disclosure;
Figure 2 is a flow chart illustrating a method for recording data of a trip according to one embodiment of the disclosure;
Figure 3 is a flow chart illustrating steps of a setup process of the method according to one embodiment of the disclosure;
Figure 4 is a flow chart illustrating steps of a data gathering process of the method according to one embodiment of the disclosure;
Figure 5 is a flow chart illustrating steps of a data processing process of the method according to one embodiment of the disclosure; and
Figure 6 is a partial graph that visualizes a location record of a vehicle.

Before the disclosure is described in greater detail, it should be noted that where considered appropriate, reference numerals or terminal portions of reference numerals have been repeated among the figures to indicate corresponding or analogous elements, which may optionally have similar characteristics.

Throughout the disclosure, the term "coupled to" or "connected to" may refer to a direct connection among a plurality of electrical apparatus/devices/equipment via an electrically conductive material (e.g., an electrical wire), or an indirect connection between two electrical apparatus/devices/equipment via another one or more apparatus/devices/equipment, or wireless communication.

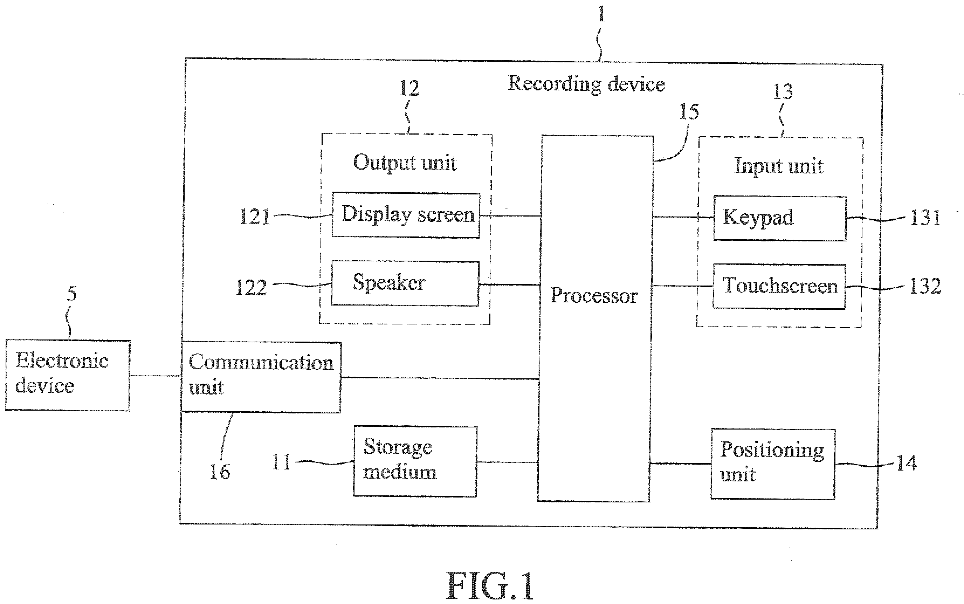

Figure 1 is a block diagram of a recording device 1 according to one embodiment of the disclosure.

The recording device 1 may be a portable device that can be mounted on a vehicle (e.g., an automobile, a motorcycle, a bicycle, etc.). In embodiments, the recording device 1 may be offered for rent by a user (also known as a traveler), who can then proceed to mount the recording device 1 onto a vehicle during a self-guided trip, and, after the self-guided trip, have the recording device 1 removed and returned to a provider (e.g., a rental company or a travel agent) of the recording device 1.

The recording device 1 includes a storage medium 11, an output unit 12, an input unit 13, a positioning unit 14, a processor 15 and a communication unit 16. In some embodiments, the recording device 1 further includes a rechargeable battery (not depicted in the drawings), and/or a charging port that can be used to charge the recording device 1 by connecting to an electricity outlet via an electric cable.

The processor 15 may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), or a radiofrequency integrated circuit (RFIC), etc.

The storage medium 11 is coupled to the processor 15, and may be embodied using, for example, random access memory (RAM), read only memory (ROM), programmable ROM (PROM), firmware, flash memory, etc. In this embodiment, the storage medium 11 stores a computer program product therein. The computer program product includes instructions that, when executed by the processor 15, cause the processor 15 to perform a number of operations as described below.

The output unit 12 is coupled to the processor 15, and in this embodiment includes a display screen 121 and a speaker 122.

The input unit 13 is coupled to the processor 15, and in this embodiment includes a keypad 131 and a touchscreen 132. In some embodiments, the display screen 121 and the touchscreen 132 may be integrated.

The positioning unit 14 is coupled to the processor 15, and may include a global positioning system (GPS) component that can receive satellite signals to obtain a current geographical location of the recording device 1 based on the received satellite signals. In various embodiments, ,the positioning unit 14 may include other components that can operate with other global navigation satellite systems (GNSS) such as Russia's Global Navigation Satellite System (GLONASS), BeiDou Navigation Satellite System (BDS) and the Galileo, etc.

The communication unit 16 is coupled to the processor 15, and may include one or more of a radiofrequency integrated circuit (RFIC), a short-range wireless communication module supporting a short-range wireless communication network using a wireless technology of Bluetooth^{®} and/or Wi-Fi, etc., and a mobile communication module supporting telecommunication using Long-Term Evolution (LTE), the third generation (3G), fourth generation (4G) and/or fifth generation (5G) of wireless mobile telecommunications technology, and/or the like. The communication unit 16 may also support wired connection.

It is noted that in other embodiments, each of the components of the recording device 1 may be embodied in manners other than as described above.

In use, the communication unit 16 enables the recording device 1 to establish a wired or wireless communication with another device, such as an electronic device 5, a cloud server, etc. The wireless communication with the electronic device 5 may be a near-field communication, a Bluetooth^{®} communication, etc.

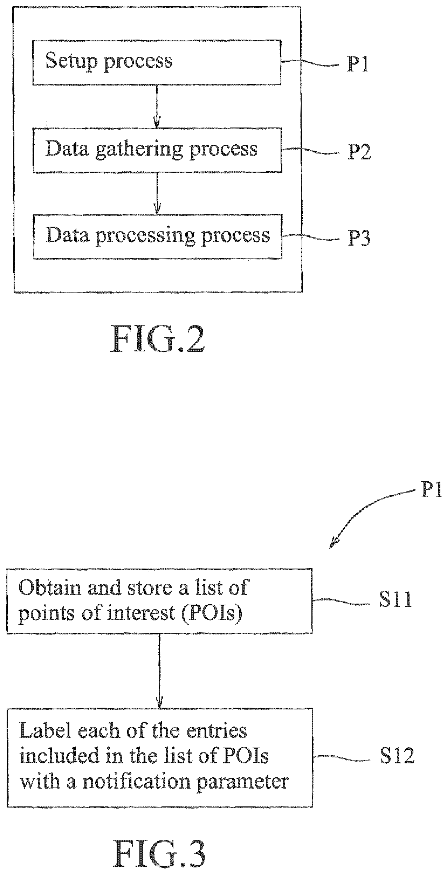

Figure 2 is a flow chart illustrating a method for recording data of a trip according to one embodiment of the disclosure. In this embodiment, the method is implemented by the recording device 1 of Figure 1 executing the computer program product. Specifically, the method for recording data of a trip includes a setup process P1, a data gathering process P2 and a data processing process P3.

Figure 3 is a flow chart illustrating steps of the setup process P1 according to one embodiment of the disclosure. In this embodiment, the setup process P1 is implemented by the recording device 1 of Figure 1, and may be implemented prior to a user of the recording device 1 embarking on a self-guided trip.

In step S11, the processor 15 of the recording device 1 obtains and stores a list of points of interest (POIs). The term "point of interest" throughout the disclosure may refer to a specific geographical location which the user is interested in and wants to visit during the self-guided trip, and may be represented in a form of a name, an address and/or a set of geographical coordinates.

In this embodiment, the user may operate an electronic device 5 (which may be embodied using a smartphone, a personal computer, a laptop, a tablet, etc.) to create the list of POIs. The list of POIs may include a plurality of entries, each including a geographical location of one POI, and associated information of the POI such as a link to a website describing the geographical location. Afterward, the list of POIs may be stored in the electronic device 5 as a file.

Then, after obtaining the recording device 1, the user may operate the recording device 1 to establish a communication between the recording device 1 and the electronic device 5, and to operate the electronic device 5 to transmit the file containing the list of POIs to the recording device 1.

In some embodiments, the file containing the list of POIs may be stored in a cloud server, and after obtaining the recording device 1, the user may operate the recording device 1 to access the cloud server and to download the file containing the list of POIs from the cloud server.

In some embodiments, the user may operate the input unit 13 to create the list of POIs, and to "save" the list of POIs in the storage medium 11.

After the operations of step S11, the flow proceeds to step S12, in which the processor 15 labels each of the entries included in the list of POIs with a notification parameter.

Specifically, the user may operate the input unit 13 to open the file containing the list of POIs. In response, the processor 15 may control the touchscreen 132 to display the entries included in the list of POIs, and a plurality of checkboxes accompanying the entries, respectively. The user may determine which ones of the POIs are of more interest than others, and manually check the corresponding ones of the checkboxes that accompany the POIs of more interest.

Afterward, the processor 15 may label the entries with checked checkboxes (i.e., the corresponding checkboxes are checked) with a notification parameter of a first value (e.g., "1"), and label the entries with unchecked checkboxes (i.e., the corresponding checkboxes are unchecked) with a notification parameter of a second value (e.g., "0"). In use, the entries with the notification parameter of the first value may be associated with the POIs that are more important and are considered as "can't miss" to the user during the self-guided trip, while the entries with the notification parameter of the second value may be associated with the POIs that are optional, and are to be visited only when time permits.

It is noted that in some embodiments, the notification parameter for all the entries may have a default value of the first value. That is to say, without the manual operation of the user to uncheck the checkboxes, all the checkboxes are checked.

Afterward, the setup process P1 is concluded.

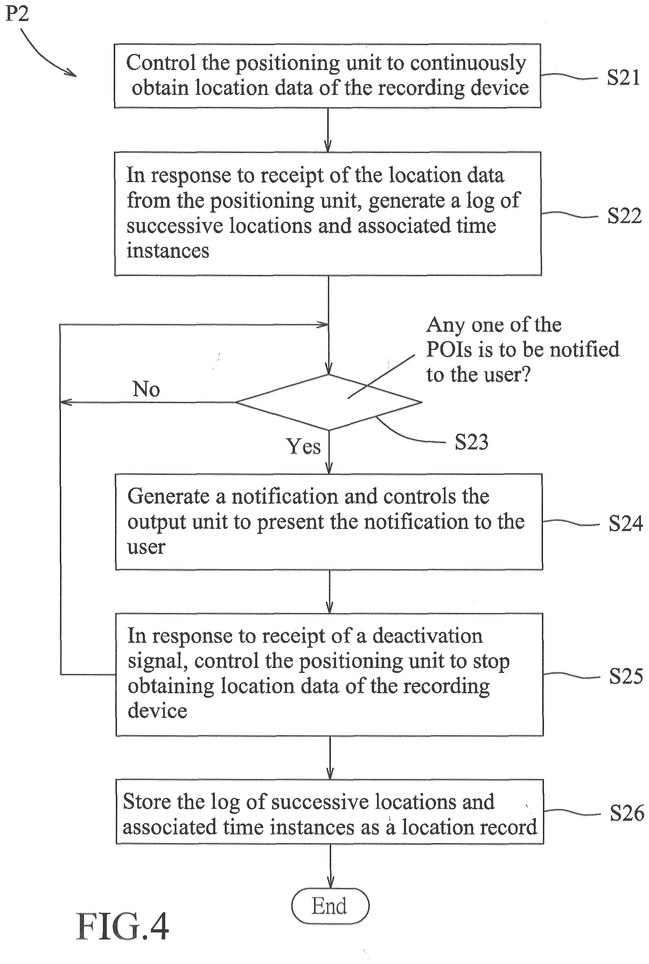

Figure 4 is a flow chart illustrating steps of the data gathering process P2 according to one embodiment of the disclosure. In this embodiment, the data gathering process P2 is implemented by the recording device 1 of Figure 1, and may be implemented during the self-guided trip.

In step S21, in response to receipt of an activation signal, the processor 15 controls the positioning unit 14 to continuously obtain location data of the recording device 1.

Specifically, when the user begins the self-guided trip, he/she may mount the recording device 1 on a vehicle (e.g., a bicycle, a motorcycle, an automobile, etc.), and operate the input unit 13 to generate the activation signal (i.e., to instruct the recording device 1 to start obtaining location data). Afterward, as the vehicle starts moving, the positioning unit 14 may transmit the location data of the recording device 1 to the processor 15 periodically.

In some embodiments, the operations of the setup process P1 may be repeated at any time during the self-guided trip, e.g., when the user intends to edit the list of POIs (e.g., to add a new location to the list of POIs or remove any existing location from the list of POIs) and/or to check/uncheck any of the associated checkboxes.

Afterward, in step S22, in response to receipt of the location data from the positioning unit 14, the processor 15 generates a log of successive locations (in the form of, for example, sets of geographical coordinates) and associated time instances.

In step S23, the processor 15 determines, according to the log, whether any one of the POIs (i.e., entries included in the list of POIs) is to be notified to the user.

Specifically, in this embodiment, when one set of geographical coordinates is generated by the positioning unit 14 and transmitted to the processor 15, the processor 15 may determine whether the received set of geographical coordinates satisfies a preset condition with respect to each of the entries included in the list of POIs.

For example, the preset condition may be that the received set of geographical coordinates indicates that the recording device 1 is within a specific distance from any one of the POIs (e.g., 1200 meters). In other examples, the preset condition may be that the received set of geographical coordinates indicates that the user may be able to reach one of the POIs within a preset time duration (e.g., 30 minutes) using the vehicle.

It is noted that in this embodiment, the processor 15 may be configured to determine whether the received set of geographical coordinates satisfies a preset condition with respect to each of the entries included in the list of POIs and having the notification parameter of the first value. That is to say, in the case that the user unchecked some of the entries in the setup process P1, the processor 15 may be configured to disregard the unchecked entries in step S23. In this configuration, the associated calculations, and therefore, processing time and power consumption may be reduced.

If the determination of step S23 is affirmative, the flow proceeds to step S24. Otherwise, the flow goes back to step S23.

In step S24, the processor 15 generates a notification and controls the output unit 12 to present the notification to the user.

In this embodiment, the notification may include a text to be presented by the display screen 121 and/or an audio to be presented by the speaker 122, indicating that the vehicle is in proximity of one of the POIs. In some embodiments, the notification may include one or more of flashing, vibration, etc.

Additionally, in the case that the associated entry included in the list of POIs includes a link to a website associated with the proximate one of the POIs, the processor 15 may generate a two-dimensional barcode (e.g., a quick response (QR) code) containing the link, and control the display screen 121 to display the two-dimensional barcode. In this manner, the user may be able to operate the electronic device 5 (which may be a smartphone with a camera) to scan the two-dimensional barcode to access the website.

In some embodiments, the processor 15 may be configured to, in response to receipt of the list of POIs, automatically retrieve one or more websites for each of the entries included in the list of POIs (e.g., a page of the location of the entry on a specific travel information platform), and to provide the link of the website (s) in the form of the two-dimensional barcode.

In some embodiments, a manner in which the notification is presented may be altered by the processor 15 based on the location data from the positioning unit 14.

In one example, after one notification regarding one POI has been presented, the processor 15 may determine a traveling speed of the vehicle (e.g., indicated by the location data from the positioning unit 14) as the vehicle approaches the associated POI. In one example, the specific distance is 1200 meters, and when the processor 15 determines that, as the vehicle travels by two intervals (e.g., the distance between the vehicle and the associated POI goes from 1200 meters to 1100 meters and from 1100 meters to 1000 meters), the vehicle has not slowed down based on the traveling speed (i.e., the traveling speed does not decrease during the intervals), the processor 15 may generate an additional notification (e.g., with a louder audio and/or with additional vibration compared to the prior notification sent), and control the output unit 13 to present the additional notification to further notify the user. More additional notifications may also be provided as the distance between the vehicle and the associated POI reduces further.

In another example, after one notification has been presented, the processor 15 may determine whether the vehicle is moving away from the associated POI. In one example, the specific distance is 1200 meters, and when the processor 15 determines that the distance between the vehicle and the associated POI increases from 1200 meters to 1300 meters, the processor 15 may generate an additional notification to further notify the user (e.g., with different text and/or audio indicating that the vehicle is moving away from the associated POI). It is noted that the altering of the notification is not limited to those described in the above examples.

In step S25, in response to receipt of a deactivation signal, the processor 15 controls the positioning unit 14 to stop obtaining location data of the recording device 1.

Specifically, the user may operate the input unit 13 to generate the deactivation signal. This may be done at the end of the self-guided trip or at the end of a day when the user is about to check into an accommodation such as a hotel.

In step S26, the processor 15 stores the log of successive locations and associated time instances as a location record in the storage medium 11, and the data gathering process P2 is concluded.

In brief, using the data gathering process P2 as described above, the user may be notified when the vehicle has moved into proximity of any one of the POIs that are deemed to be important to the user, and may be provided with a two-dimensional barcode that includes a link associated with the proximate one of the POIs. In this manner, the recording device 1 may be configured to perform the data gathering process P2 without needing to establish an Internet communication, reducing the power consumption. This enables the recording device 1 to be out working for a longer period in situations like a self-guided trip.

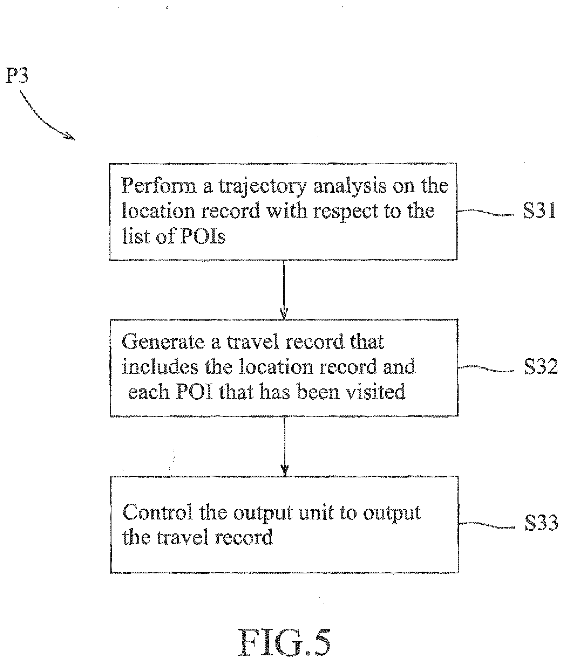

Figure 5 is a flow chart illustrating steps of the data processing process P3 according to one embodiment of the disclosure. In this embodiment, the data processing process P3 is implemented by the recording device 1 of Figure 1, and may be implemented after the data gathering process P2 has been concluded, or after the user operates the input unit 13 to generate a command.

In step S31, the processor 15 performs a trajectory analysis on the location record with respect to the list of POIs. In this embodiment, the processor 15 accesses the storage medium 11 to obtain the location record.

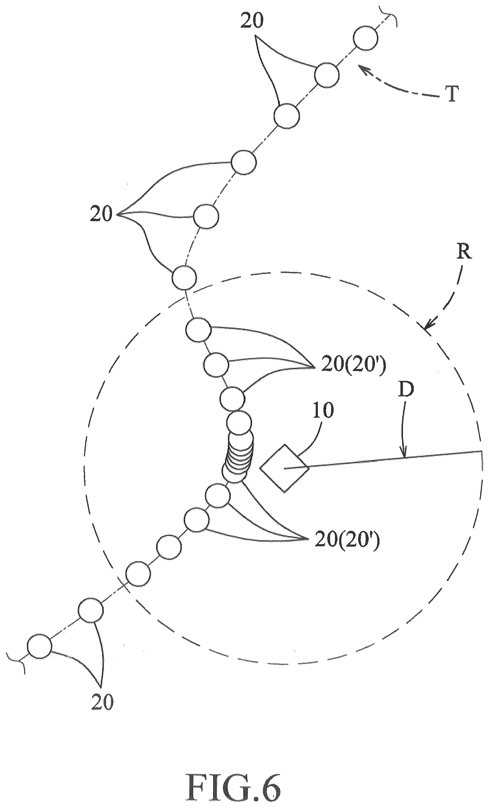

In one example, the location record of the vehicle may be partially visualized in a graph as shown in Figure 6. In Figure 6, a plurality of nodes 20 are present, each representing one entry of location included in the log of the location record. A trajectory (T) may be formed by connecting the nodes 20 from the location record.

Additionally, the POIs may also be presented in the graph. For example, one POI is presented in the graph of Figure 6 in a form of a region defined by a reference center point 10 (which may be a set of geographical coordinates of the POI) and a preset radius (D) (e.g., 5 meters). In this embodiment, the region is defined as a circle (R). It is noted that due to the nature of different POIs (which may be a restaurant, a park, etc.), the preset radius (D) and the shape of the region may vary among the POIs, and may be edited by the user in the setup process P1 or by the processor 15 based on prior records (e.g., information of the POI obtained from the Internet or a cloud server).

In this embodiment, the trajectory analysis on the location record includes determining, for each of the POIs, whether the trajectory (T) indicates that the POI has been visited.

Specifically, in the trajectory analysis, the processor 15 determines, for each of the POIs, an associated region (e.g., the circle (R) in Figure 6), and determines whether there exist a number of nodes 20 located within the region.

In one example, the positioning unit 14 is configured to generate the location data every second. In such as case, the nodes 20 represent movement (or the lack thereof) of the vehicle every second.

Additionally, the condition "the POI has been visited" may be defined as "the positioning unit 14 mounted on the vehicle has entered the region associated with the POI, and stayed within the region for longer than a predetermined time period". In some embodiments, the condition "the POI has been visited" may be defined as "the positioning unit 14 mounted on the vehicle has entered the region associated with the POI", and in such cases, when there is at least one node 20 located within the region, the processor 15 may deem the POI as having been visited.

In order to determine whether the vehicle has stayed in the region for longer than a predetermined time period, the processor 15 may first determine a number of successive nodes 20' that are located within the region. In one example, the predetermined time period is 10 minutes, and the positioning unit 14 is configured to generate location data every second. In such a case, when the number of successive nodes 20' that are located within the region is larger than six hundred, the processor 15 determines that the vehicle has stayed in the region for longer than the predetermined time period. It is noted that for different POIs and different configurations of the positioning unit 14, the number of successive nodes 20' that are located within the region needed for the processor 15 to determine that the vehicle has stayed in the region for longer than the predetermined time period may be different in other cases.

Using the manners as described above, the processor 15 is able to determine, for each of the POIs included in the list of POIs, whether the vehicle (and therefore the user) has been to the POI. It is noted that in some examples, only the entries with the notification parameter of the first value are considered.

Afterward, in step S32, the processor 15 generates a travel record that includes the location record and each POI that has been visited (determined in step S31). It is noted that in some embodiments, the travel record may include all POIs included in the list of POIs, with any POI that has been visited being assigned with a visit parameter of "1", and any POI that has not been visited being assigned with a visit parameter of "0". Alternatively, the travel record may include only the POI(s) that has (have) been visited, and exclude the POI(s) that has (have) not been visited.

In step S33, the processor 15 controls the output unit 12 to output the travel record. The operation of step S33 may be implemented automatically after the travel record is generated, or may be invoked when the user operates the input unit 13 to input a command for outputting the travel record. It is noted that in some embodiments, the travel record may present the POI(s) that has (have) been visited and the POI(s) that has (have) been not visited differently. Alternatively, the travel record may present only the POI(s) that has (have) been visited, and exclude the POI(s) that has (have) not been visited. Alternatively, the travel record may present only the POI(s) that has (have) not been visited.

In some embodiments, the travel record may be transmitted to the electronic device 5 for storage or further reference.

Afterward, the data processing process P3 is concluded. It is noted that the implementation of each of the setup process P1, the data gathering process P2 and the data processing process P3 is not limited to the manners as described above.

According to one embodiment of the disclosure, there is provided a recording device, which is embodied using a smartphone or a tablet owned by the user, and includes the components of the recording device 1 as described with reference to Figure 1. In use, the user may install the computer program product on the recording device of the user prior to the self-guided trip, and execute the computer program product so as to implement the method for recording data of a trip as described above.

According to one embodiment of the disclosure, there is provided a recording device, which is embodied using a laptop, a personal computer or a cloud server. In this embodiment, the recording device may establish a communication with a positioning device that is mounted on a vehicle or a smartphone or a tablet owned by the user so as to receive the location data therefrom, and execute the computer program product so as to implement the method for recording data of a trip as described above.

According to one embodiment of the disclosure, there is provided a computer program product that includes instructions that, when executed by a processor of an electronic device, cause the processor to perform steps of the method for recording data of a trip as described above. In use, the computer program product may be stored in a non-transitory storage medium such as a storage medium as shown in Figure 1, a hard disk, a flash drive, a compact-disk (CD), etc., or may be stored in a cloud storage in a manner that the computer program product can be accessed and downloaded.

In various embodiments, the electronic device 5 may be embodied using the recording device 1 as described with reference to Figure 1, the smartphone or the tablet owned by the user, or the laptop, the personal computer or the server.

To sum up, embodiments of the disclosure provide a method, a recording device and a computer program product for recording data of a trip. In the method, the recording device may first receive a list of POIs to be visited during a self-guided trip. During the self-guided trip, when it is determined that a vehicle, on which the recording device is mounted, moves into proximity of one of the POIs, the recording device may be configured to generate and output a notification to notify the user. The notification may also include a two-dimensional barcode that encodes a link to a website associated with the one of the POIs. After the self-guided trip is completed, the recording device may be configured to generate and output a trajectory analysis on the location record generated during the self-guided trip, so as to determine whether the vehicle (and therefore the user) has actually been to each of the POIs included in the list of POIs, and to generate and output a travel record that includes the location record and the POI(s) which the recording device determines that the vehicle has been to, so as to notify the user which one(s) of the POIs has (have) been visited during the self-guided trip.

In some embodiments, the recording device are built with some specific characteristics: easily portable and can be effortlessly mounted onto a vehicle, smaller in size and weight, lower power consumption while in operation, and relatively cheap to produce and maintain. As such, the recording device may be equipped with a smaller display screen and less Internet connectivity. In one embodiment, the size of the display screen of the recording device may be purposely designed to be smaller than a display screen of a smartphone. For example, the typical smartphones may have display screens with a diagonal of 4.7 inches, and therefore, the display screen of the recording device may have a diagonal of about 3 to 3.5 inches, but is not limited as such.

In use, the display screen of the recording device may be designed to present a preset number of icons (e.g., six) simultaneously, each with corresponding text for explanation. When it is to display the two-dimensional code, the display screen may be controlled to display the two-dimensional code taking up the space of one or more icons, and the remaining space may be used to display some additional texts for explanation. In this manner, the user is not constantly compelled to look at the display screen of the recording device, and the potential distraction while using a vehicle (e.g., a bicycle, a motorcycle, an automobile, etc.) is reduced. Also, the smaller size of the display screen may contribute to the reduction of power consumption, and enables the recording device to be operational for longer. The resulting structure of the recording device may make the maintenance of the recording device easier.

Using the configuration as above, the recording device is configured to generate and display a two-dimensional barcode for scanning. Instead of displaying the information, this configuration requires the recording device, which is built with a smaller display screen, to only display the two-dimensional barcode. This configuration may be more fitting with the specification of the record device, and provide a friendlier viewing environment for the user to view the information using, for example, the user's own smartphone, since the information may be difficult to be crammed into the display screen of the record device, forcing the user to read the smaller-sized texts and/or to scroll the display screen. That is to say, this configuration (including the record device and the electronic device) may provide an enhanced viewing experience for the user.

Additionally, in some embodiments, the recording device may be configured to be in connection with the electronic device of the user. In use, after generating the notification, the recording device may also transmit the notification to the electronic device for enabling the electronic device to present a message related to the notification to the user, so as to notify the user that the information associated with the proximate one of the POIs is now being displayed by the recording device in the form of a two-dimensional barcode. In some embodiments, after generating the notification, the recording device may also transmit a notification with a message that will notify the user with the text "you have a two-dimensional barcode about POI related information" to the electronic device.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for recording data of a trip to be implemented by a processor of a recording device, the method being **characterized by**:
in response to receipt of a location record, performing a trajectory analysis on the location record so as to determine, with respect to a plurality of points of interest (POIs), whether each of the POIs has been visited; and
generating a travel record that includes the location record and any of the POIs that has been visited.

2. The method of Claim 1, further being **characterized by** obtaining a list of POIs that includes a plurality of entries, each of the entries including a geographical location of one POI, and associated information of the POI;
wherein the trajectory analysis includes forming a trajectory from the location record, and determining, for each of the POIs, whether the trajectory indicates that the POI has been visited.

3. The method of Claim 2, **characterized in that** the generating of the travel record includes excluding any of the POIs that has not been visited.

4. The method of any one of Claims 2 and 3, **characterized in that** the determining of whether the trajectory indicates that the POI has been visited includes:
determining, an associated region for the POI; and
determining whether the location record includes a location that is located within the region.

5. The method of any one of Claims 2 to 4, the recording device further including a positioning unit and a storage medium, the method further **characterized by**:
in response to receipt of an activation signal, controlling the positioning unit to continuously obtain location data of the recording device;
generating a log of successive locations and associated time instances; and
in response to receipt of a deactivation signal, controlling the positioning unit to stop obtaining location data of the recording device.

6. The method of Claim 5, the recording device further including an output unit, the method further **characterized by**:
after the receipt of the activation signal, determining, according to the log, whether any one of the POIs is to be notified to the user; and
when it is determined that one of the POIs is to be notified to the user, generating a notification and controlling the output unit to present the notification.

7. The method of Claim 6, the output unit including a touchscreen, **characterized in that**:
each of the entries of the list of POIs includes a link of a website associated with the POI;
the generating of the notification includes generating a two-dimensional barcode that encodes the link, and the controlling of the output unit to present the notification includes controlling the touchscreen to display the two-dimensional barcode.

8. The method of Claim 7, further **characterized by**, after generating the notification:
determining a traveling speed of the positioning unit as the positioning unit approaches the one of the POIs; and
when it is determined, based on the traveling speed, that the positioning unit has not slowed down, generating an additional notification and controlling the output unit to present the additional notification.

9. The method of Claim 7, the recording device being in connection with an electronic device, the method further **characterized by**, after generating the notification: transmit the notification to the electronic device, for enabling the electronic device to present a message related to the notification to a user of the electronic device.

10. The method of Claim 6, **characterized in that**, the controlling of the output unit to present the notification includes controlling the touchscreen to display only the two-dimensional barcode.

11. The method of Claim 6, further **characterized by**, after receiving the list of POIs:
in response to user operation, labeling one of the entries with a notification parameter having one of a first value and a second value;
wherein the determining of whether any one of the POIs is to be notified to the user is implemented on those of the POIs included in the list of POIs and having the notification parameter of the first value.

12. A recording device, **characterized by** a processor that is configured to:
in response to receipt of a location record, perform a trajectory analysis on the location record so as to determine, with respect to a plurality of points of interest (POIs), whether each of the POIs has been visited; and
generate a travel record that includes the location record and any of the POIs that has been visited.

13. A non-transitory computer program product, **characterized in that** the non-transitory computer program product includes instructions that, when executed by a processor of an electronic device, cause the processor to perform steps of the method of Claim 1.
